# EUROPÄISCHE PATENTANMELDUNG

(11) **EP 1 348 850 A1**
(43) Veröffentlichungstag der Anmeldung: **01.10.2003**
(21) Anmeldenummer: 03006013.1
(22) Anmeldetag: 18.03.2003
(51) Int. Cl.: F02D 9/10, F02M 15/02, F16K 49/00

(54) **Drosselklappenstutzen mit Heizvorrichtung**

(30) Priorität: 19.03.2002 DE 10212125
(71) Anmelder: Delphi Technologies, Inc., Troy, MI 48007 (US)
(72) Erfinder: Hoffmann, Rainald, 4940 Bascharage (LU)
(74) Vertreter: Manitz, Finsterwald & Partner GbR

(57) **Zusammenfassung**

Ein Drosselklappenstutzen umfasst einen Saugkanal (14) für den Drosselklappenstutzen durchströmende Ansaugluft und einen Kanal (28) zur formschlüssigen Aufnahme eines Abschnitts eines Kühlflüssigkeitsschlauchs (32) entlang wenigstens eines Teils des Umfangs des Kühlflüssigkeitsschlauchs, wobei wenigstens eine Kanalwand des Kanals wärmeleitend mit einem Temperierabschnitt (34) einer Wand des Saugkanals verbunden ist und der Kanal über seine gesamte Länge eine Kanallängsöffnung (30) aufweist.

## Beschreibung

Die vorliegende Erfindung betrifft einen Drosselklappenstutzen.

Drosselklappenstutzen werden in die Luftzufuhr von Ottomotoren eingebaut. Eine in einem Saugkanal des Drosselklappenstutzens bewegbar angeordnete Drosselklappe dient als Ventil zur Regelung der Luftzufuhr zu dem Ottomotor.

Drosselklappenstutzen besitzen häufig eine Vorrichtung, die zum Vorwärmen eines Gehäuses des Drosselklappenstutzens dient, wodurch eine Vereisung des Saugkanals und insbesondere auch eine damit gegebenenfalls verbundene Blockierung der Drosselklappe verhindert werden soll.

Der Drosselklappenstutzen weist hierzu häufig ein Gehäuse aus Aluminiumguss auf. In dem Gehäuse ist nahe dem Saugkanal ein röhrenförmiger Kanal ausgebildet, in den Schlauchstutzen aus Messing oder Stahl eingepresst sind, an die Kühlflüssigkeitsschläuche angeschlossen werden, um über die Kühlflüssigkeit das Gehäuse und damit insbesondere die Wände des Saugkanals bzw. den Saugkanal in dem Gehäuse zu erwärmen.

Dieser Aufbau bekannter Drosselklappenstutzen hat jedoch den Nachteil, dass leicht Lecks im Kühlflüssigkeitskreis auftreten können. Solche Lecks können zum einen durch Fehler an den Drosselklappenstutzen, wie z.B. Porositäten des Aluminiumgussgehäuses oder einem fehlerhaften Einpressen der Schlauchstutzen und zum anderen durch schlechte Anbringung des Kühlflüssigkeitsschlauchs an den Schlauchstutzen bedingt sein.

Der vorliegenden Erfindung liegt die Aufgabe zugrunde, einen Drosselklappenstutzen bereitzustellen, der eine Temperierung wenigstens eines vorgegebenen Wandabschnitts eines Saugkanals des Drosselklappenstutzens unter Verwendung von Kühlflüssigkeit erlaubt, gleichzeitig aber das Risiko von durch die Verwendung der Kühlflüssigkeit bedingten Lecks minimiert.

Die Aufgabe wird gelöst durch einen Drosselklappenstutzen mit den Merkmalen des Anspruchs 1.

Der erfindungsgemäße Drosselklappenstutzen weist einen Saugkanal für die den Drosselklappenstutzen durchströmende Ansaugluft und einen Kanal zur formschlüssigen Aufnahme eines Abschnitts eines Kühlflüssigkeitsschlauchs entlang wenigstens eines Teils des Umfangs des Kühlflüssigkeitsschlauchs auf, wobei wenigstens eine Kanalwand des Kanals wärmeleitend mit einem Temperierabschnitt einer Wand des Saugkanals verbunden ist und der Kanal über seine gesamte Länge eine Kanallängsöffnung aufweist.

Der Temperierabschnitt kann im einfachsten Fall durch einen gegebenenfalls nur schmalen Bereich einer Wand des Saugkanals gebildet sein, an der Ansaugluft vorbeiströmt. Die Erwärmung dieses Bereichs kann ausreichen, um eine Vereisung benachbarter Wandbereiche zu verhindern. Zweckmäßigerweise umfasst der Temperierabschnitt wenigstens den Wandbereich eines Abschnitts des Saugkanals, der zur Aufnahme einer Drosselklappe dient. Vorzugsweise erstreckt sich der Temperierbereich über die ganze Wand des Saugkanals.

Weiterhin ist an dem Drosselklappenstutzen erfindungsgemäß ein Kanal zur formschlüssigen Aufnahme eines Abschnitts eines Kühlflüssigkeitsschlauchs entlang wenigstens eines Teils des Umfangs des Kühlflüssigkeitsschlauchs ausgebildet, wobei wenigstens eine Kanalwand des Kanals wärmeleitend mit dem Temperierabschnitt verbunden ist. Diese Ausbildung des Kanals erlaubt eine einfache, aber mehr als ausreichende Wärmeübertragung von einem in dem Kanal formschlüssig angeordneten Kühlflüssigkeitsschlauch über die Kanalwand des Kanals zu dem Temperierabschnitt. Insbesondere wird durch die formschlüssige Aufnahme eine große Kontaktfläche zwischen der Oberfläche des Kühlflüssigkeitsschlauchs und der Kanalwand erreicht, wodurch der Wärmewiderstand zwischen Kühlflüssigkeitsschlauch und Kanalwand gering gehalten werden kann.

Grundsätzlich genügt es dabei, dass ein Kühlflüssigkeitsschlauch nur entlang wenigstens eines Teils des Umfangs des Kühlflüssigkeitsschlauchs formschlüssig an der Kanalwand anliegt, wobei jedoch mit zunehmender Anlagefläche der Wärmeübergang von dem Kühlflüssigkeitsschlauch auf den Temperierabschnitt verbessert wird.

Zweckmäßigerweise ist für einen guten Wärmeübergang von dem Kühlflüssigkeitsschlauch zu dem Temperierabschnitt der Kanal in einem Bereich des Drosselklappenstutzens aus einem gut wärmeleitfähigen Material, beispielsweise einem Metall, ausgebildet. Insbesondere kann auch der Temperierabschnitt aus einem Metall gebildet sein.

Um ein einfaches Einsetzen eines Kühlflüssigkeitsschlauchs in den Kanal zu ermöglichen, weist der Kanal erfindungsgemäß über seine gesamte Länge eine Kanallängsöffnung auf, durch die ein Kühlflüssigkeitsschlauch in den Kanal eingesetzt werden kann. Unter der gesamten Länge des Kanals wird hierbei die zur Aufnahme eines Kühlflüssigkeitsschlauchs dienende Länge des Kanals verstanden. Hierdurch wird eine einfache Montage des Kühlflüssigkeitsschlauchs an den erfindungsgemäßen Drosselklappenstutzen ermöglicht.

Der erfindungsgemäße Drosselklappenstutzen ermöglicht es, ohne eine Unterbrechung des Kühlflüssigkeitsschlauchs Wärme von diesem auf den Temperierabschnitt zu übertragen, so dass entsprechende Lecks im Kühlflüssigkeitskreislauf vermieden werden. Gleichzeitig reicht aber der so erzielbare Wärmeübergang zwischen Kühlflüssigkeitsschlauch und Drosselklappenstutzen aus, um den Saugkanal des Drosselklappenstutzens bzw. den Temperierabschnitt zur Vermeidung einer Vereisung des Saugkanals zu erwärmen.

Darüber hinaus werden zur Bereitstellung einer Heizung des Saugkanals weniger Einzelteile benötigt, was den Einbau eines erfindungsgemäßen Drosselklappenstutzens erheblich vereinfacht.

Bevorzugt liegt die Weite des Kanals zwischen 10 Millimeter und 40 Millimeter, so dass gebräuchliche Kühlmittelschläuche formschlüssig in diesem Kanal angeordnet werden können.

Um bekannte Kühlflüssigkeitsschläuche, gegebenenfalls durch Zusammendrücken, durch die Kanallängsöffnung in den Kanal einsetzen zu können, ist es bevorzugt, dass die Kanallängsöffnung wenigstens 4 Millimeter breit ist.

Grundsätzlich kann der Kühlflüssigkeitsschlauch auf unterschiedliche Weise in dem Kanal gehalten sein. Insbesondere können entsprechende Haltevorrichtungen, beispielsweise Klammern vorgesehen sein. Da Kühlflüssigkeitsschläuche jedoch in der Regel zumindest quer zu ihrer Längsrichtung elastisch verformbar sind, ist es bevorzugt, dass sich der Kanal ausgehend von der Kanallängsöffnung zunächst erweitert. Diese Gestaltung des Kanalquerschnitts erlaubt es, einen elastischen Kühlflüssigkeitsschlauch zunächst zusammenzudrücken, diesen durch die Kanallängsöffnung in den Kanal einzuführen und dann freizugeben, so dass sich der bei der Rückkehr in seine ursprüngliche Form an die Kanalwand bzw. die Kanalwände anpresst. Da sich der Kanal ausgehend von der Kanallängsöffnung zunächst erweitert, d.h. vom Kanalinneren aus gesehen in Richtung auf die Kanallängsöffnung zumindest im Bereich derselben verengt, wird der Kühlflüssigkeitsschlauch in dem Kanal gehalten. Der Kanal dient daher gleichzeitig als Haltevorrichtung für den Kühlflüssigkeitsschlauch.

Für einen guten Wärmeübergang zwischen einem Kühlflüssigkeitsschlauch und dem Temperierabschnitt ist es notwendig, dass ein guter Formschluss vorliegt. Da bekannte Kühlflüssigkeitsschläuche in der Regel rund ausgebildet sind, ist es bevorzugt, dass die Kanalwand entlang des Querschnitts des Kanals keinen Knick aufweist, der einen weitgehenden Formschluss verhindern würde.

Da bekannte Kühlflüssigkeitsschläuche in der Regel einen kreisrunden Querschnitt aufweisen, ist es für einen guten Formschluss und gleichzeitig eine gute Kräfteverteilung auf verschiedene Teile des Kühlflüssigkeitsschlauchs besonders bevorzugt, dass ein Abschnitt des Kanals einen Querschnitt mit der Form wenigstens eines Abschnitts eines Kreises aufweist.

Grundsätzlich ist zur Erzielung eines guten Wärmeübergangs zwischen Kühlflüssigkeitsschlauch und Kanal eine möglichst große Kontaktfläche zwischen Kühlflüssigkeitsschlauch und Kanalwand wünschenswert. Dabei ist jedoch zu beachten, dass der Querschnitt des Kühlflüssigkeitsschlauchs entsprechend der Strömungsverhältnisse im Kühlflüssigkeitskreislauf dimensioniert sein muss. Um bei so gegebenem Querschnitt eine möglichst große Oberfläche zu erhalten, ist es bevorzugt, dass die Kanalwand entlang eines Querschnitts unterschiedlich gekrümmt ist. Beispielsweise kann der Querschnitt der Kanalwand im Wesentlichen durch einen Abschnitt einer Ellipse gebildet sein. Hierdurch wird eine im Vergleich zum Querschnitt größere Oberfläche des Kühlflüssigkeitsschlauchs in dem Kanal erreicht als bei einer gleichmäßigen, einem Kreis entsprechenden Krümmung, so dass der Wärmeübergang verbessert ist.

Bevorzugt ist der Kanal an einem Ansatz der Außenwand des Drosselklappenstutzens ausgebildet, so dass ein Kühlflüssigkeitsschlauch leicht ohne ein Abknicken oder starkes Abbiegen in den Kanal einsetzbar ist.

Erfindungsgemäß ist die Kanalwand des Kanals wärmeleitend mit dem Temperierabschnitt verbunden, d.h. dass zwischen den Kanalwänden und dem Temperierabschnitt möglichst keine wärmeisolierenden Schichten liegen sollten. Besonders bevorzugt ist es daher, dass der Ansatz und der Temperierabschnitt des Drosselklappenstutzens einstückig ausgebildet sind. Hierdurch werden Grenzflächen zwischen dem Ansatz und dem Temperierabschnitt, die grundsätzlich wärmeisolierend wirken, vermieden, so dass ein guter Wärmeübergang erreicht wird. Darüber hinaus kann ein solcher Drosselklappenstutzen sehr einfach als Gussteil aus einem Metall, insbesondere Aluminium oder Aluminiumlegierungen, hergestellt werden. Eine Herstellung mit Gießverfahren erlaubt insbesondere auch die einfache Ausbildung vergleichsweise komplizierter Geometrien.

Weiterhin wird die Aufgabe gelöst durch eine Drosselklappenstutzenvorrichtung mit den Merkmalen des Anspruchs 10, die einen Drosselklappenstutzen mit einem Saugkanal für den Drosselklappenstutzen durchströmende Ansaugluft und einem Kanal zur formschlüssigen Aufnahme eines Abschnitts eines Kühlflüssigkeitsschlauchs entlang wenigstens eines Teils des Umfangs des Kühlflüssigkeitsschlauchs, dessen Kanalwände wärmeleitend mit einem Temperierabschnitt einer Wand des Saugkanals verbunden sind, und einen formschlüssig in dem Kanal (26) angeordneten Kühlflüssigkeitsschlauch umfasst.

Grundsätzlich braucht bei der Drosselklappenvorrichtung der Kanal keine sich über seine gesamte Länge erstreckende Kanallängsöffnung aufzuweisen, jedoch ist dieses bevorzugt, da ansonsten der Kühlflüssigkeitsschlauch in den Kanal eingeschoben werden müsste, was zur Erzielung eines entsprechenden Formschlusses zumindest bei bekannten Schläuchen erhebliche Kräfte erfordern würde und umständlich wäre.

Bevorzugt ist der Drosselklappenstutzen daher erfindungsgemäß und insbesondere nach einer oder mehrerer der oben genannten Weiterbildungen oder bevorzugten Ausführungsformen ausgebildet.

Bevorzugt wird ein Kühlflüssigkeitsschlauch verwendet, der einen Mantel aus einem elastomeren Material, beispielsweise einem kraftstoff- und ölbeständigen Gummi, aufweist. Hierdurch wird zum einen eine hohe Dichtigkeit des Kühlflüssigkeitsschlauchs gewährleistet. Zum anderen kann ein solcher Kühlflüssigkeitsschlauch zusammengedrückt und in den Kanal des Drosselklappenstutzens eingeführt werden, wo er dann bei geeigneter Ausbildung des Kanals allein durch die rücktreibenden Kräfte in Richtung auf die ursprüngliche Form des Kühlflüssigkeitsschlauchs in dem Kanal mit einem gewissen Anpressdruck und dem damit verbundenen guten Formschluss gehalten wird, der einerseits ein Verschieben des Schlauchs in dem Kanal oder gar ein Herausgleiten des Schlauchs aus dem Kanal verhindert und andererseits durch den erhöhten Anpressdruck zu einem verbesserten Wärmeübergang zwischen Kühlflüssigkeitsschlauch und Kanalwand führt.

Um auch hohe Kühlflüssigkeitsdrücke aufnehmen zu können, ist der Schlauch besonders bevorzugt textilverstärkt.

Eine bevorzugte Ausführungsform der Erfindung wird nun beispielhaft anhand der Zeichnungen erläutert. Es zeigen:
- Fig. 1: eine schematische Vorderansicht eines Drosselklappenstutzens mit einem Kühlflüssigkeitsschlauch,
- Fig. 2: eine schematische Schnittansicht durch den Drosselklappenstutzen in Fig. 1 entlang der Linie A-A, und
- Fig. 3: eine schematische Seitenansicht des Drosselklappenstutzens in Fig.1.

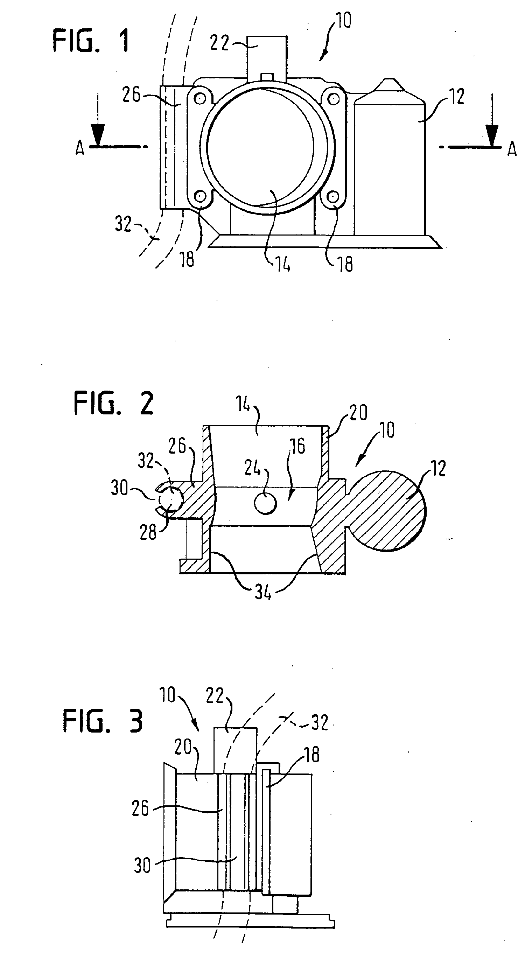

In den Fig. 1 bis 3 ist ein Drosselklappenstutzen nach einer bevorzugten Ausführungsform der Erfindung nur schematisch gezeigt, so dass einige für die Erfindung unwesentliche Details, zum Beispiel in Bezug auf eine Drosselklappe und deren Antrieb, dort nicht gezeigt sind.

In Fig. 1 weist der Drosselklappenstutzen, der einstückig als Aluminiumgussteil ausgebildet ist, ein Gehäuse 10 auf, das zur Befestigung des Drosselklappenstutzens und zur Aufnahme eines Drosselklappenantriebs sowie einer in dem Drosselklappenstutzen zu haltenden, in den Figuren nicht gezeigten Drosselklappe vorgesehen ist.

Ein Ansatz 12 des Gehäuses 10 dient zur Aufnahme eines Elektromotors, der Teil des Drosselklappenantriebs ist.

In dem Gehäuse 10 ist ein Saugkanal 14 ausgebildet, der durch eine in einem Ventilbereich 16 (vgl. Fig. 2) angeordnete Drosselklappe verschließbar ist. Zum Anschluss des Drosselklappenstutzens bzw. des Saugkanals 14 an einen Ansaugkrümmer ist an dem Gehäuse ein Vier-Loch-Befestigungsflansch 18 vorgesehen. Weiterhin ist an dem Gehäuse 10 zum Anschluss eines Ansaugluftrohres an den Saugkanal 14 ein runder Flansch 20 ausgebildet.

Zur Aufnahme einer Achse einer Drosselklappe sind in dem Gehäuse 10 weiterhin entsprechende Lager 22 und 24 vorgesehen.

An einer Seite des Gehäuses 10 ist ein Ansatz 26 angeformt, der sich über die gesamte Längsseite des Gehäuses 10 erstreckt und C-förmig ausgebildet ist (vgl. Fig. 2). So entsteht in dem Ansatz 26 ein Kanal 28, der eine Kanallängsöffnung 30 aufweist, die sich über die gesamte Länge des Kanals erstreckt.

Der Kanal 28 weist dabei einen Querschnitt von der Form eines Kreisabschnitts auf, wobei sich der Kanalquerschnitt ausgehend von der Kanallängsöffnung 30 zunächst erweitert.

Die maximale Weite des Kanals 28 beträgt dabei etwa 12 Millimeter, während die Weite der Kanallängsöffnung 30 etwa 8 Millimeter beträgt.

In dem Kanal 28 ist ein in den Figuren durch gestrichelte Linien dargestellter, quer zu seiner Längsrichtung elastisch verformbarer Kühlflüssigkeitsschlauch 32 angeordnet, der aus einem textilverstärkten, kraftstoffund ölbeständigen Gummi besteht und einen kreisförmigen Querschnitt hat. Der Kühlflüssigkeitsschlauch 32 weist einen Außendurchmesser auf, der geringfügig, beispielsweise 0,5 Millimeter, größer ist, als die maximale Weite des Kanals 28.

Dadurch, dass der Querschnitt des Kanals 28 die Form eines Kreisabschnitts hat, der geringfügig kleiner ist als der des Kühlflüssigkeitsschlauchs 32, liegt der in dem Kanal angeordnete Kühlflüssigkeitsschlauch 32 gut formschlüssig an der Kanalwand an, wodurch ein guter Wärmeübergang von dem Kühlflüssigkeitsschlauch 32 auf den Ansatz 26 gewährleistet wird.

Bedingt durch die einstückige Ausbildung des Gehäuses 10 wird Wärme von dem Ansatz 26 über das Gehäuse 10 zu Saugkanalwänden 34 des Gehäuses 10 geleitet, die einen Temperierabschnitt darstellen. Die Erwärmung der Saugkanalwände 34 verhindert eine Eisbildung an den Saugkanalwänden 34 und somit ein Blockieren der Drosselklappe im Saugkanal 14 sowie eine Veränderung des freien Querschnitts im Ventilbereich 16.

Zur Montage wird der Kühlflüssigkeitsschlauch 32 quer zu seiner Längsrichtung zusammengedrückt und durch die Kanallängsöffnung 30 in den Kanal 28 eingeschoben. Dort nimmt der Kühlflüssigkeitsschlauch 32 wieder seine ursprüngliche Form an, soweit dies durch die Kanalwände 28 möglich ist.

Bei eventuell notwendigen Reparaturen lässt sich der Kühlflüssigkeitsschlauch 32 wieder ebenso einfach aus dem Kanal 28 entfernen, indem er einfach durch die Kanallängsöffnung 30 aus dem Kanal 28 gezogen wird.

### Bezugszeichenliste

- 10: Gehäuse
- 12: Ansatz zur Aufnahme eines Elektromotors
- 14: Saugkanal
- 16: Ventilbereich
- 18: Vier-Loch-Befestigungsflansch
- 20: runder Flansch
- 22: Lager für Drosselklappenachse
- 24: Lager für Drosselklappenachse
- 26: Ansatz
- 28: Kanal
- 30: Kanallängsöffnung
- 32: Kühlflüssigkeitsschlauch
- 34: Saugkanalwände

## Patentansprüche

1. Drosselklappenstutzen mit einem Saugkanal (14) für den Drosselklappenstutzen durchströmende Ansaugluft und einem Kanal (28) zur formschlüssigen Aufnahme eines Abschnitts eines Kühlflüssigkeitsschlauchs (32) entlang wenigstens eines Teils des Umfangs des Kühlflüssigkeitsschlauchs (32), wobei wenigstens eine Kanalwand des Kanals (28) wärmeleitend mit einem Temperierabschnitt (34) einer Wand (34) des Saugkanals (14) verbunden ist und der Kanal (28) über seine gesamte Länge eine Kanallängsöffnung (30) aufweist.

2. Drosselklappenstutzen nach Anspruch 1,
**dadurch gekennzeichnet,**
**dass** die maximale Weite des Kanals (28) zwischen 10 mm und 40 mm liegt.

3. Drosselklappenstutzen nach Anspruch 1 oder 2,
**dadurch gekennzeichnet,**
**dass** die Kanallängsöffnung (30) wenigstens 4 mm breit ist.

4. Drosselklappenstutzen nach Anspruch 3,
**dadurch gekennzeichnet,**
**dass** sich der Kanal (28) ausgehend von der Kanallängsöffnung (30) zunächst erweitert.

5. Drosselklappenstutzen nach einem der vorhergehenden Ansprüche,
**dadurch gekennzeichnet,**
**dass** die Kanalwand entlang des Querschnitts des Kanals (28) keinen Knick aufweist.

6. Drosselklappenstutzen nach einem der vorhergehenden Ansprüche,
**dadurch gekennzeichnet,**
**dass** ein Abschnitt des Kanals (28) einen Querschnitt mit der Form wenigstens eines Abschnitts eines Kreises aufweist.

7. Drosselklappenstutzen nach einem der Ansprüche 1 bis 5,
**dadurch gekennzeichnet,**
**dass** die Kanalwand entlang eines Querschnitts unterschiedlich gekrümmt ist.

8. Drosselklappenstutzen nach einem der vorhergehenden Ansprüche,
**dadurch gekennzeichnet,**
**dass** der Kanal (28) in einem Ansatz (26) an einer Außenwand des Drosselklappenstutzens ausgebildet ist.

9. Drosselklappenstutzen nach einem der vorhergehenden Ansprüche,
**dadurch gekennzeichnet,**
**dass** der Ansatz (26) und der Temperierabschnitt (34) des Drosselklappenstutzens einstückig ausgebildet sind.

10. Drosselklappenstutzenvorrichtung umfassend
einen Drosselklappenstutzen mit einem Saugkanal für den Drosselklappenstutzen durchströmende Ansaugluft und einem Kanal (28) zur formschlüssigen Aufnahme eines Abschnitts eines Kühlflüssigkeitsschlauchs (32) entlang wenigstens eines Teils des Umfangs des Kühlflüssigkeitsschlauchs (32), dessen Kanalwände wärmeleitend mit einem Temperierabschnitt (34) einer Wand des Saugkanals verbunden sind, und
einen formschlüssig in dem Kanal (28) angeordneten Kühlflüssigkeitsschlauch (32).

11. Drosselklappenstutzenvorrichtung nach Anspruch 10,
**dadurch gekennzeichnet,**
**dass** der Drosselklappenstutzen nach einem der Ansprüche 1 bis 9 ausgebildet ist.

12. Drosselklappenstutzenvorrichtung nach Anspruch 10 oder 11,
**dadurch gekennzeichnet,**
**dass** der Kühlflüssigkeitsschlauch (32) einen Mantel aus einem elastomeren Material aufweist.
